# EUROPEAN PATENT SPECIFICATION

(11) **EP 2 153 124 B1**
(45) Date of publication and mention of the grant of the patent: **09.11.2011**
(21) Application number: 07792143.5
(22) Date of filing: 01.08.2007
(51) Int. Cl.: F21V 21/22

(54) **TELESCOPIC SUPPORTING COLUMN AND FLOODLIGHT USING THE SAME**
TELESKOPISCHE STÜTZSÄULE UND DIESE VERWENDENDER SCHEINWERFER
COLONNE DE SUPPORT TÉLESCOPIQUE ET PROJECTEUR D'ILLUMINATION UTILISANT CELLE-CI

(43) Date of publication of application: 17.02.2010
(73) Proprietor: Light Boy CO., LTD., Tokyo 206-0801 (JP)
(72) Inventor: YOSHIMORI, Norihito, Inagi-shi Tokyo 206-0801 (JP); TAGUCHI, Masayuki, Inagi-shi Tokyo 206-0801 (JP); TANO, Kensuke, Inagi-shi Tokyo 206-0801 (JP)
(74) Representative: Bauer Vorberg Kayser Patentanwälte
(86) International application number: PCT/JP2007/065475
(87) International publication number: WO 2008/126340

(56) References cited:
- DE-U1- 9 316 598
- US-A- 6 071 096

## Description

### TECHNICAL FIELD

The present invention relates to a telescopic supporting column and floodlight using the same, specifically relates to one capable of holding a stationary object attached at a distal end of the telescopic supporting column at a predetermined height.

### BACKGROUND ART

Conventionally, as a telescopic supporting column of this kind is disclosed an elevator rod used for a floodlight comprising a lighting device as a stationary object and a dynamo as an electric power unit which supplies electric power to said lighting device (for example, see patent document 1). In the floodlight, the elevator rod is erected such that its distal end to which said lighting device is attached is directed vertically upward, and it is designed so as to be telescopic.

The elevator rod is constructed by sequentially and loosely fitting one or more intermediate tubular columns relative to a base tubular column in a nested manner. The length thereof is adjusted by vertically shining the respective intermediate tubular columns so that said lighting device may be held at a predetermined height.

Thus, the above-mentioned patent document 1 enables the lighting device to be reliably held at a predetermined height, using a simple structure.
Patent Document 1: Japanese Utility Model Registration Publication No. 3092453
Document DE 93 16 598 U1 discloses a telescoping supporting mast according to the preamble of claim 1, containing several tubular columns. The device further comprises a braking mechanism for retracting the columns in a controlled manner. Each column contains a closing cap at its inner end having an opening for letting out the compressed air while retracting the column. The described mast enables the user to slowly retract the mast, but it does not help extending the mast. Furthermore the amount of support or braking power is not adjustable.

### DISCLOSURE OF THE INVENTION

### PROBLEMS TO BE SOLVED BY THE INVENTION

According to the prior art disclosed in the foregoing patent document 1, however, vertical load is applied to an elevator rod when the lighting device of considerably heavy weight is attached to an upper end thereof. Therefore, there has been a concern that the elevator rod may fall suddenly due to the aforesaid vertical load when it is retracted from an extended condition.

The heavier the lighting device is, the more conspicuous such problems becomes, thus having led to inferior maneuverability.

In view of the above-mentioned, it is, therefore, an object of the invention to provide a telescopic supporting column that enables the improving of the maneuverability thereof. It is another object of the invention to provide a floodlight using such telescopic supporting columns.

### MEANS FOR SOLVING THE PROBLEMS

In order to achieve the above object, a telescopic supporting column of the present invention comprises: a mast that is made telescopic by inserting two or more tubular columns sequentially in a nested manner; and a braking mechanism for moderately retracting said mast,
wherein said braking mechanism comprises:
a pressure-regulating portion provided in a proximal tubular column that makes up of a proximal end of said mast;
a closing portion provided in a distal tubular column that makes up of a distal end of said mast; and
an air chamber formed inside said mast by partitioning off said pressure-regulating portion and closing portion, and
wherein said pressure-regulating portion includes:
   a first vent hole that communicates said air chamber with an exterior;
   a second vent hole that communicates said air chamber with an exterior; and
   a valving element that closes said second vent hole in a manner capable of opening and closing said second vent hole only.

### EFFECTS OF THE INVENTION

According to the telescopic supporting column of the present invention, in the case of retracting the mast, the second vent hole is closed by the valving element, thereby enabling a compressed air to escape to the exterior only from the first vent hole that is specifically designed beforehand so as to moderately let out the air inside the air chamber, while in the case of extending the mast, the air is fed not only from the first vent hole but also from the second vent hole, thereby enabling the mast to be lifted up remarkably easily, thus enhancing the maneuverability.

### BRIEF DESCRIPTION OF THE DRAWINGS

Fig. 1 is an overall perspective view of a floodlight showing a telescopic supporting column in a service condition according to the present invention.
Fig. 2 is a longitudinal section of the telescopic supporting column of Fig. 1.
Fig. 3 is a perspective view showing a pressure-regulating portion of the telescopic supporting column of Fig. 1 that is in a service condition, in which (A) illustrates the one at the time it is extended, while (B) shows the one at the time it is retracted.
Fig. 4 is a cross-sectional view showing a modified example of the valving element of the telescopic supporting column of Fig. 1.

### BEST MODE FOR CARRYING OUT THE INVENTION

Next is a description of preferred embodiments of the present invention, with reference to the attached drawings.

### 1. Overall Structure

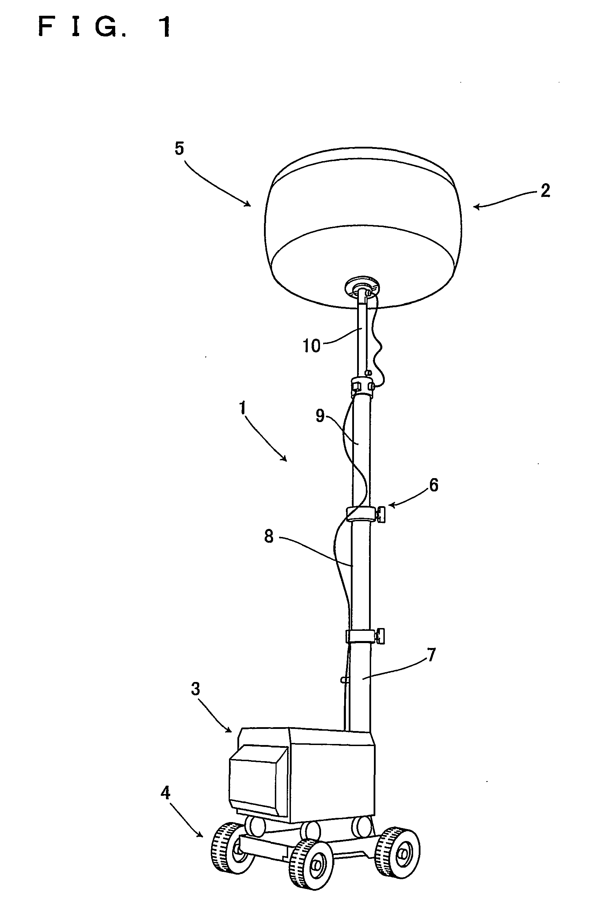

A telescopic supporting column 1 shown in Fig. 1 is used for a floodlight 5 which comprises a lighting device 2 as a stationary object, an electric power unit 3, and a carrier device 4 as a pedestal. This floodlight 5 is constructed such that the lighting device 2 is attached to the distal end of the telescopic supporting column 1, while the telescopic supporting column 1 and the electric power unit 3 are fixedly attached to the carrier device 4. Thus, after moving the floodlight 5 to a suitable place, an electric power is supplied to the lighting device 2 held at a predetermined height by the telescopic supporting column 1, thus enabling the floodlighting of the surroundings.

The telescopic supporting column 1 comprises a mast 6 which is made telescopic by inserting two or more tubular columns sequentially in a nested manner. Said mast 6 is constituted of three cylinder-shaped tubular columns, i.e., a first tubular column 7 as a proximal tubular column fixed to the carrier device 4; a second tubular column 8 as an intermediate tubular column whose outer diameter is formed smaller than the first tubular column 7; and a third tubular column 9 as a distal tubular column whose outer diameter is formed smaller than the second tubular column 8.

The mast 6 is constructed by inserting the second tubular column 8 into said first tubular column 7, and then, inserting the third tubular column 9 into said second tubular column 8, so as to be telescopic. An attachment rod 10 provided vertically movably relative to the third tubular column 9 is provided at an upper end of the third tubular column 9, while said lighting device 2 is detachably attached to the attachment rod 10.

Thus way, the telescopic supporting column 1 according to the present invention is constituted so that the lighting device 2 may be held at a predetermined height by fixing the proximal end thereof to the carrier device 4 with the distal end thereof being directed vertically upwards, and then by extending or retracting the same.

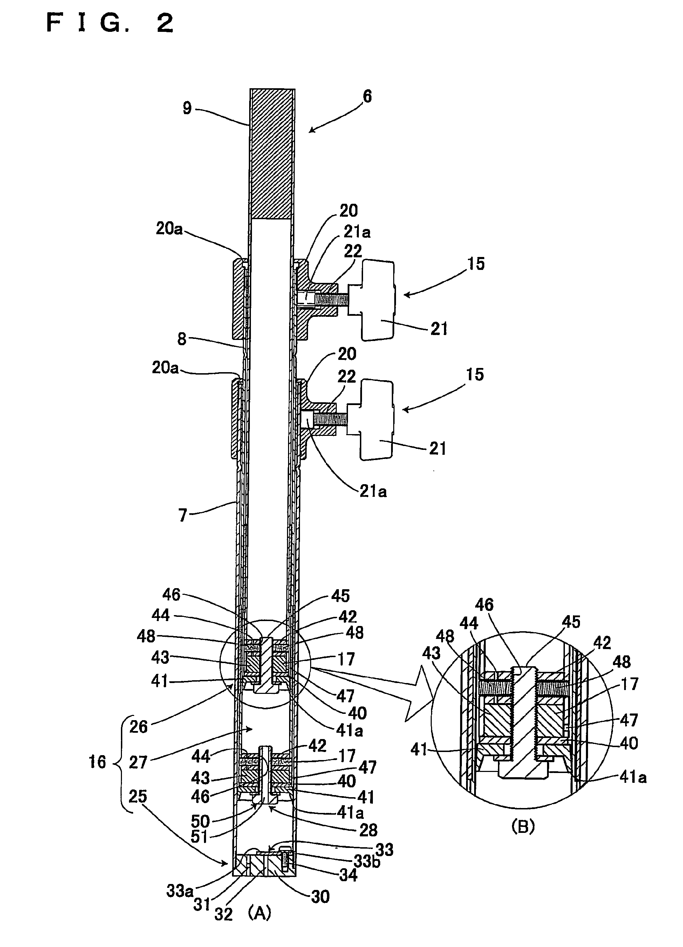

As shown in Fig. 2, the telescopic supporting column 1 comprises: the mast 6; stopper mechanisms 15; a braking mechanism 16; and lubricating oil feed mechanisms 17, so that the mast 6 can be extended or retracted smoothly.

The stopper mechanisms 15 are provided at the distal end of the first tubular column 7 and the second tubular column 8. These stopper mechanisms 15 only differ in their installing positions, and do not differ in structure at all, and thus only the stopper mechanism 15 provided in the first tubular column 7 will be explained hereinbelow.

This stopper mechanism 15 comprises a cylindrical retainer body 20 and a detachable screw 21. Said retainer body 20 is fixed to the distal end of the first tubular column 7, and comprises a turned-back portion 20a provided at an upper end so as to be able to abut to an outside side wall of the second tubular column 8 and a tapped through-hole 22 penetrating in a radial direction. Moreover, an abutting portion 21 a abutting to the outside side wall of the first tubular column 7 is provided at the distal end of the detachable screw 21.

This stopper mechanism 15 fixes the second tubular column 8 to the first tubular column 7 by screwing the detachable screw 21, and then pressing the turned-back portion 20a against the outside side wall of the second tubular column 8. In the meantime, it should be noted that the structure of the stopper mechanism 15 is not limited to the foregoing structure, and various known stopper mechanisms 15 may be applied thereto.

The braking mechanism 16 comprises: a pressure-regulating portion 25 provided in a lower end opening of the first tubular column 7; a closing portion 26 provided in a lower end opening of the third tubular column 9; and an air chamber 27 formed inside the mast 6 by partitioning off the pressure-regulating portion 25 and the closing portion 26. Incidentally, a communicating portion 28 which communicates the inside of the first tubular column 7 with the inside of the third tubular column 9 is provided in a lower end opening of the second tubular column 8.

The pressure-regulating portion 25 is constituted so that the pressure in the air chamber 27 can be adjusted suitably in response to the extending or retracting action of the mast 6. The pressure-regulating portion 25 includes a bottom plate member 30 which closes the lower end opening of the first tubular column 7, said bottom plate member 30 having a first vent hole 31, a second vent hole 32 and a valving element 33, and fixed to the lower end opening of the first tubular column 7.

The first vent hole 31 and the second vent hole 32 penetrate through the first tubular column 7 in the axial direction thereof. The first vent hole 31 is formed so that the air in the air chamber 27 can be allowed to escape to the exterior in a moderate manner. On the other hand, the second vent hole 32 is formed so that the air can be smoothly introduced into the inside of the air chamber 27 from the exterior. Accordingly, the second vent hole 32 is formed larger than the first vent hole 31.

The valving element 33 functions as a so-called check valve which allows the airflow from the exterior into the inside of the air chamber 27, but blocks the airflow from the insider of the air chamber 27 to the exterior. This valving element 33 is provided by forming a tabular member of elastically-deformable rubber in a longitudinally-elongated rectangular shape, having one end 33a arranged in a manner closing said second vent hole 32, and the other end 33b fixed to the bottom plate member 30 by the bolt 34.

The closing portion 26 is constituted so that the airtightness can be kept at the upper end of the air chamber 27. This closing portion 26 comprises: a bottom member 40 which closes the third tubular column 9; and a seal 41. Moreover, the closing portion 26 is integrally provided with said lubricating oil feed mechanism 17 for feeding grease as lubricating oil to said seal 41.

The seal 41 is constituted so that the third tubular column 9 can be moved up and down smoothly, while keeping the airtightness at the upper end of the air chamber 27. The seal 41 is made of a cylindrical member having a bottom, and is annularly in contact with the inner wall of the second tubular column 8 at an open end 41a that is defined by an edge the diameter of which is increased toward the bottom.

The lubricating oil feed mechanisms 17 have the ceiling member 42 arranged opposite to the bottom member 40 that closes the lower end opening of the third tubular column 9, thereby forming a storage chamber 43 for storing grease between said bottom member 40 and said ceiling member 42. The ceiling member 42 is provided with a feed hole 44 in fluid communication with the storage chamber 43 and a tapped hole 46 into which a hexagon head bolt 45 as a fastening member is screwed. A discharge hole 47 which feeds the grease inside the storage chamber 43 to said seal 41 is provided in the storage chamber 43. This discharge hole 47 is provided in the side wall of the third tubular column 9. The storage chamber 43 is filled with grease.

Next is a description of an assembling procedure of the above-structured lubricating oil feed mechanism 17. First, the ceiling member 42 is placed opposite to the lower end opening and then fixed to the side wall of the third tubular column 9 with a hexagon socket head bolt 48 so that the storage chamber 43 may be formed inside the third tubular column 9. Moreover, the bottom member 40 and the seal 41 are fixed to the lower end opening of the third tubular column 9 by allowing the bottom surface of the seal 41 to be abutted to one surface of the bottom member 40, and screwing the hexagon head bolt 45, inserted through a through-hole formed through a center thereof, into the tapped hole 46 formed in the ceiling member 42. Thus, the lubricating oil feed mechanism 17 is formed.

It should be noted that the communicating portion 28 and the lubricating oil feed mechanism 17 provided in the second tubular column 8 differ from the closing portion 26 provided in the third tubular column 9, only in its fastening member. In other words, the communicating portion 28 provided in the second tubular column 8 employs a bolt 50 with a communicating hole as a fastening member. The bolt 50 with a communicating hole is formed in a center axis thereof with a communicating hole 51 that communicates the first tubular-column 7 side with the third tubular-column 9 side with the bottom of the second tubular column 8 disposed therebetween.

### 2. Action and Effect

Next is an explanation of the action and effect of the above-structured telescopic supporting column 1. The floodlight 5 equipped with the telescopic supporting column 1 is moved to an installing position by the carrier device 4, and extends the mast 6 at the installing position, thus holding the lighting device 2 at a predetermined height. Therefore, hereinafter will be first discussed a case where the mast 6 makes a transition from its retracted condition to its extended condition.

In order to extend the mast 6, the detachable screw 21 is loosened and the second tubular column 8 and the third tubular column 9 are pulled up, thereby increasing a volume of the air chamber 27 defined by the pressure-regulating portion 25 of the first tubular column 7 and the closing portion 26 of the third tubular column 9. It should be noted that since the second tubular column 8 moves upwards together with the third tubular column 9, even if only the second tubular column 8 is pulled up, yet the volume of the air chamber 27 defined by the pressure-regulating portion 25 of the first tubular column 7 and the closing portion 26 of the third tubular column 9 will be increased.

In the meantime, airtightness at the upper end of the air chamber 27 is kept by the seal 41 provided in the closing portion 26 of the third tubular column 9. Then, the air chamber 27 is brought under a negative pressure temporarily. Accordingly, under such negative pressure, air is allowed to flow into the air chamber 27 from the exterior through the first vent hole 31 provided in the bottom plate member 30 of the first tubular column 7.

In the meantime, if the upward displacement of the third tubular column 9 is small, in other words, if the amount of the air fed from the first vent hole 31 is small, compared to the increase of the volume of the air chamber 27, the air chamber 27 will still remain in a negative pressure. Since the negative pressure of the air chamber 27 causes a force biasing in a volume-reducing direction, i.e., a vertically-downward biasing force against the closing portion 26 of the third tubular column 9, a vertically-upward force will be decreased by just that much, or offset depending in some cases. Thus, the negative pressure produced in the air chamber 27 will impose a burden on a user who is trying to pull up the mast 6.

According to the present invention, however, the second vent hole 32 is formed so that the air may be fed to the air chamber 27 not only from the first vent hole 31 but from the second vent hole 32. Thus, the external air is allowed to flow into the air chamber 27 from the opening of the second vent hole 32 inside the air chamber 27. Accordingly, the air is fed from the second vent hole 32 as well as from the first vent hole 31, thus releasing the negative pressure of the air chamber 27, whereby the second tubular column 8 and the third tubular column 9 can be pulled up remarkably easily. As a result, the telescopic supporting column 1 makes it possible to easily extend the mast by ensuring the release of the negative pressure inside the air chamber 27 at the time of extension, thus enabling the maneuverability of the device to be improved reliably.

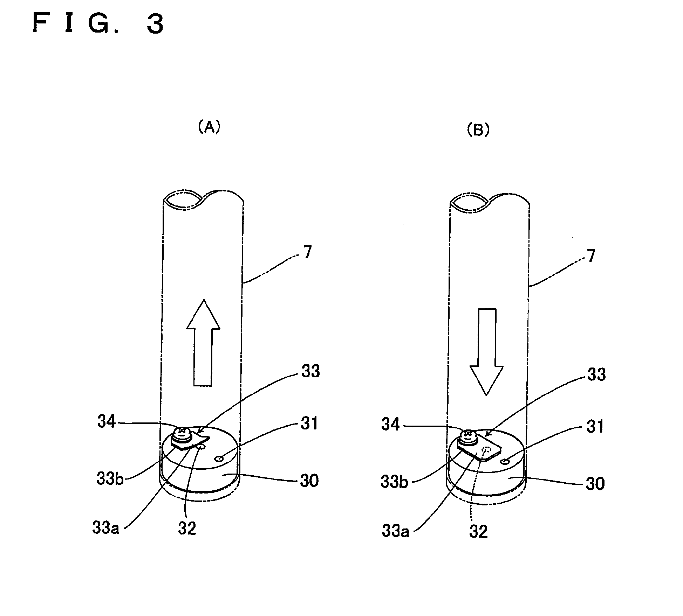

In the meantime, the valving element 33 is provided in the second vent hole 32. This valving element 33 is constituted of a tabular member made of elastically-deformable rubber. When the mast 6 is extended and the inside of the air chamber 27 is brought into a negative pressure, one end 33a of the valving element 33 that had closed the second vent hole 32 will be pulled upwards due to this negative pressure. As a result, the valving element 33 is allowed to open the second vent hole 32, as shown in Fig. 3 (A).

Thus way, the pressure-regulating portion 25 is constituted such that the valving element 33 is opened at the time of extension of the mast 6 to thereby open the second vent hole 32, thus allowing the air to be introduced into the air chamber 27 from the second vent hole 32 as well as from the first vent hole 31, thereby ensuring the negative pressure of the air chamber 27 to be released.

Thus way, the second tubular column 8 and the third tubular column 9 are pulled up to a predetermined length, and then the detachable screw 21 is tightened, thereby enabling the telescopic supporting column 1 to hold the lighting device 2 installed at the distal end of the mast 6 at a predetermined height. Under that condition, an electric power is supplied from the electric power unit 3 by turning on a power switch (not shown), and thus an electric bulb is allowed to light up at the same time that a balloon is inflated by the air fed from a fan. In this way, the leg device holds the lighting device 2 at a predetermined height, enabling the supplying of light to the surroundings.

Next will be discussed a case where the device of the invention makes a transition from the state in which the mast 6 is extended to a state in which it is retracted. First, the power switch is turned off, so that the electric bulb is put off, while stopping the supply of the air to the balloon to deflate the same.

Subsequently, in order to retract the extended mast 6, the detachable screw 21 is loosened and then the second tubular column 8 and the third tubular column 9 are moved downward. In this case, the second tubular column 8 and the third tubular column 9 are subject to a vertically- downward load to a considerable degree, due to their self-weights as well as the self-weight of the lighting device 2. Such downward load causes the second tubular column 8 and the third tubular column 9 to free-fall.

Consequently, the volume of the air chamber 27 defined by the pressure-regulating portion 25 of the first tubular column 7 and the closing portion 26 of the third tubular column 9 will be decreased. Then, the air in the air chamber 27 will turn into a compressed air. Incidentally, since airtightness at the upper end of the air chamber 27 is kept by the seal 41 provided in the closing portion 26 of the third tubular column 9, the compressed air in the air chamber 27 is allowed to flow to the exterior through the first vent hole 31. This first vent hole 31 is designed beforehand so that the compressed air may be allowed to flow in a moderate manner.

Thus, the pressure-regulating portion 25 holds the pressure of the air chamber 27 at a predetermined pressure by allowing the compressed air to escape to the exterior at a preset flow rate or below. Due to the pressure of this air chamber 27, a vertically-upward force is produced at the closing portion 26 of the third tubular column 9. Accordingly, the telescopic supporting column 1 allows the mast 6 to be retracted gently by keeping the inside of the air chamber 27 at a predetermined pressure to produce such vertically-upward force, which is then allowed to counter the vertically-downward force developed by the self-weights of the second tubular column 8, the third tubular column 9 and the lighting device 2, thereby retracting the mast 6 gently. In this way, according to the telescopic supporting column 1 of the invention, it is possible to prevent the mast 6 from falling suddenly at the time of retraction of the mast 6, thus improving the maneuverability. Incidentally, the pressure of the air chamber 27 decreases in association with the retraction of the mast 6, and reaches an atmospheric pressure after the third tubular column 9 has reached a bottom dead center.

In the meantime, although the second vent hole 32 is formed in the bottom plate member 30 of the first tubular column 7, the second vent hole 32 is closed by the valving element 33, and the valving element 33 itself is pressed against the bottom plate member 30 by the compressed air, thereby enabling the second vent hole 32 to be kept in a closed state reliably. That is, the compressed air can be allowed to escape to the exterior only from the first vent hole 31 that is specifically designed for letting out the air in the air chamber 27 in a gentle and moderate manner.

Accordingly, the telescopic supporting column 1 allows the volume of the air chamber 27 to be decreased gently, and, as a result, the mast 6 is retracted gently in association with the reduction of the volume of the air chamber 27. In this way, the telescopic supporting column 1 can prevent the sudden fall of the mast 6 reliably even when it is retracted by the self-weights of the second tubular column 8, the third tubular column 9 and the lighting device 2, thereby enabling the improving of maneuverability.

Furthermore, according to the present embodiment, the valving element 33 is constituted of a tabular member made of elastically-deformable rubber that is formed in a longitudinally-elongated rectangular shape, having its one end 33a arranged so as to close said second vent hole 32, and its other end 33b fixed to the bottom plate member 30 by the bolt 34. Accordingly, when the inside of the air chamber 27 is in a negative pressure, namely when the mast 6 is extended, the valving element 33 is pulled upwards due to the negative pressure, thereby opening the second vent hole 32.

On the other hand, when the compressed air is formed in the air chamber 27, in other words, when the mast 6 is retracted, the valving element 33 is pressed against the bottom plate member 30, and closes the second vent hole 32 reliably. In this way, the valving element 33 either closes or opens the second vent hole 32 suitably in response to the telescopic action of the mast 6. Accordingly, the pressure-regulating portion 25 adjusts the pressure of the air chamber 27 suitably, and limits the amount of the air to be allowed to escape to the exterior at the time of retraction, thus retracting the mast 6 gently, while allowing the efficient introduction of the air from the exterior at the time of extension, to thereby place no burden on a user who pulls up the mast 6. Therefore, the telescopic supporting column 1 of the invention enables the air in the air chamber 27 to be adjusted appropriately in response to the telescopic action of the mast 6, the maneuverability of the device can be improved reliably even if a user does not specifically intend to do so.

Moreover, the seals 41 provided in the second tubular column 8 and the third tubular column 9 are allowed to slide on the inner walls of the first tubular column 7 and the second tubular column 8, respectively in association with the telescopic action of the mast 6. The second tubular column 8 and the third tubular column 9 are each provided with the lubricating oil feed mechanism 17, and are constituted so that grease can be fed to the seal 41. As a result, grease is always fed to the seal 41, so the wear and degradation can be prevented, realizing the smoothly-sliding action. Thus, according to the telescopic supporting column 1 of the present embodiment, maneuverability of the device can be improved.

Furthermore, the lubricating oil feed mechanisms 17 of the communicating portion 28 provided in the second tubular column 8 are constituted so that grease can be forcedly fed to the seal 41. That is, a feed hole 44 which communicates with the storage chamber 43 is formed in the ceiling member 42 of each lubricating oil feed mechanism 17. Through this feed hole 44, the above-mentioned compressed air formed in the air chamber 27 at the time of retraction of the mast 6 pressurizes the grease in the storage chamber 43. The grease stored in the storage chamber 43 that has been pressurized by the compressed air is pushed out from a discharge hole 47 formed in the side wall of the third tubular column 9, and is fed to the seal 41.

As is apparent from the foregoing, according to the telescopic supporting column 1 of the present invention, it is possible to forcedly feed grease to the seal 41 when retracting the mast 6, by applying pressure to the grease inside the storage chamber 43 by the compressed air formed in the air chamber 27. That is, according to the telescopic supporting column 1 of the present embodiment, it is possible for a user to unintentionally continue to feed the grease stored in the storage chamber 43 to the seal 41 reliably, as long as he/she continues to use it in a normal manner. Thus, the telescopic supporting column 1 of the invention can prevent degradation of the seal 41, while realizing the smooth operation thereof, thus enabling the improving of the maneuverability even more reliably.

Moreover, the bolt 50 with the communicating hole is used as a fastening member in the communicating portion 28 provided in the second tubular column 8. Accordingly, without the need for the separate communicating hole 51 provided in the storage chamber 43 for storing grease, the third tubular-column 9 side is allowed to communicate with the first tubular-column 7 side, thereby enabling the air chamber 27 to be formed reliably. According to the telescopic supporting column 1, therefore, it is possible to decrease the number of manufacturing processes, while enabling the prevention of leakage of grease from the communicating hole 51.

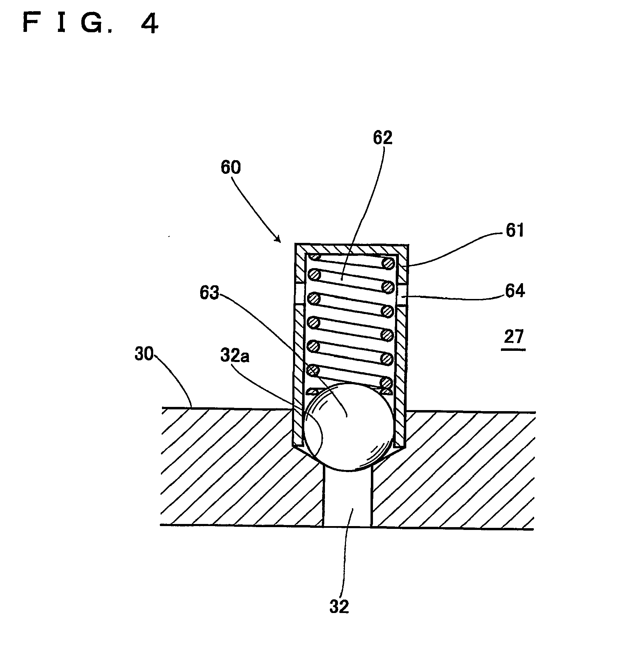

Next, a modified example of the foregoing valving element, which is denoted as a valving element 60, is explained with reference to Fig. 4. The valving element 60 shown in Fig. 4 comprises: a casing 61 provided so as to close an orifice 32a formed at the air chamber 27 side of the second vent hole 32; a coil spring 62 loaded within the casing 61; and a ball valve 63 installed so as to close said second vent hole 32 while being biased by the coil spring 62. In the meantime, an air hole 64 is formed through a body of the casing 61 in advance.

According to the valving element 60 structured as above, when retracting the mast 6, in other words, when the inside air pressure within the air chamber 27 is higher than the outside air pressure, the ball valve 63 is pressed against the second vent hole 32 due to the biasing force by the coil spring 62, thus closing the second vent hole 32. Thus, the telescopic device 1 allows the mast 6 to be retracted gently by allowing the air inside the air chamber 27 to escape only from the first vent hole 31 in a moderate manner.

On the other hand, when extending the mast 6, in other words, when an upward force applied to the ball valve 63 due to the difference in pressure between the outside atmospheric pressure and the inside air pressure within the air chamber 27 becomes greater than a biasing force from the coil spring 62, the ball valve 63 is lifted up from the orifice 32a by the above-mentioned upward force, thereby opening the second vent hole 3. Thus, not only through the first vent hole 31, but also through the second vent hole 32 can the mast 6 introduce the outside air into the air chamber 27 via the air hole 6. As a result, the telescopic device 1 enables a user to smoothly extend the mast 6 without imposing a burden to the user.

The present invention is not limited to the foregoing embodiments, but various modifications are possible within the gist of the present invention. For example, although the number of the second tubular columns 8 used as the intermediate tubular columns is one in the present embodiment, two or more second tubular columns 8 may be used as the intermediate tubular columns. Alternatively, it is also possible to provide no second tubular columns 8 at all.

Whilst the mast 6 is constituted of tubular columns of a cylindrical shape in the foregoing embodiments, it may be constituted of those of a rectangular parallelepiped shape

Whilst the pedestal of the invention is discussed as the carrier device 4 in the foregoing embodiments, it should not be limited thereto, but may be an unfoldable tripod or the like.

Although the present invention is applied to the lighting device 2 as one example of the stationary object in the foregoing embodiments, it may be applied to any other suitable object, such as a camera and a speaker.

Although the lighting device 2 of the invention is discussed as one comprising the balloon in the foregoing embodiments, it may comprise a spotlight.

Although the valving element 33 is constituted of an elastically-deformable rubber tabular member in the foregoing embodiments, it may be constituted of any other suitable member having elasticity, such as a metallic tabular member.

## Claims

1. A telescopic supporting column (1) comprising a mast (6) that is made telescopic by inserting two or more tubular columns (7, 8, 9) sequentially in a nested manner, the telescopic supporting column (1) further comprises a braking mechanism (16) for moderately retracting said mast (6), said braking mechanism (16) comprises:
- a pressure-regulating portion (25) provided in the proximal tubular column (7) that makes up of a proximal end of said mast (6);
- a closing portion (26) provided in the distal tubular column (9) that makes up of a distal end of said mast (6); and
- an air chamber (27) formed inside said mast (6) by partitioning off said pressure-regulating portion (25) and closing portion (26), and wherein said pressure-regulating portion (25) includes:
- a first vent hole (31) that communicates said air chamber (27) with an exterior; **characterized in that** the pressure regulating portion furthermore includes
- a second vent hole (32) that communicates said air chamber (27) with an exterior; and
- a valving element (33) that closes said second vent hole (32) in a manner capable of opening and closing said second vent hole (32) only.

2. The telescopic supporting column (1) according to claim 1, **characterized in that** said valving element (33) allows an airflow from an exterior into said air chamber (27), while said valving element (33) does not allow an airflow from said air chamber (27) to an exterior.

3. The telescopic supporting column (1) according to claim 1 or 2, **characterized in that** said closing portion (26) includes:
- a seal (41) that slides on an inner wall of said proximal tubular column (7); and
- one or more lubricating oil feed mechanisms (17) that feed lubricating oil to said seal (41).

4. The telescopic supporting column (1) according to any one of claims 1 to 3, **characterized in that** one or more intermediate tubular columns (8) are provided between said distal tubular column (9) and said proximal tubular column (7), said one or more intermediate tubular columns (8) having a communicating portion (28) that communicates said distal tubular column (9) with said proximal tubular column (7), and that said communicating portion (28) includes:
- a seal (41) that slides on an inner wall of said proximal tubular column (7); and
- one or more lubricating oil feed mechanisms (17) that feed lubricating oil to said seal (41).

5. The telescopic supporting column (1) according to claim 4, **characterized in that** said lubricating oil feed mechanism (17) is formed with a feed hole (51) that is in fluid communication with said air chamber (27).

6. A floodlight (5) comprising the telescopic supporting column (1) according to any one of claims 1 to 5.

## Patentansprüche

1. Eine teleskopische Stützsäule (1), die einen Mast (6) umfasst, der teleskopisch ausgebildet ist, indem zwei oder mehr rohrförmige Säulen (7, 8, 9) nacheinander verschachtelt ineinander gesteckt werden, wobei die teleskopische Stützsäule (1) des Weitere einen Bremsmechanismus (16) zum verlangsamten Einfahren des Mastes (6) umfasst,
wobei der Bremsmechanismus (16) umfasst:
- einen Druckregelungsabschnitt (25), der in der proximalen rohrförmigen Säule (7) vorgesehen ist, die ein proximales Ende des Mastes (6) bildet;
- ein Schließabschnitt (26), der in der distalen rohrförmigen Säule (9) vorgesehen ist, die ein distales Ende des Mastes (6) bildet; und
- eine Luftkammer (27), die in dem Mast (6) gebildet ist, indem der Druckregelungsabschnitt (25) und der Schließabschnitt (26) abgeteilt sind, und wobei der Druckregelungsabschnitt (25) umfasst:
- ein erstes Entlüftungsloch (31), das die Luftkammer (27) mit einer Außenseite in Verbindung bringt;
**dadurch gekennzeichnet, dass** der Druckregelungsabschnitt des Weiteren umfasst
- ein zweites Entlüftungsloch (32), das die Luftkammer (27) mit einer Außenseite in Verbindung bringt; und
- ein Ventilelement (33), das das zweite Entlüftungsloch (32) so schließt, dass nur das zweite Entlüftungsloch (32) geöffnet und geschlossen werden kann.

2. Die teleskopische Stützsäule (1) nach Anspruch 1, **dadurch gekennzeichnet, dass** das Ventilelement (33) einen Luftstrom von einer Außenseite in die Luftkammer (27) erlaubt, während das Ventilelement (33) einen Luftstrom von der Luftkammer (27) zu einer Außenseite nicht erlaubt.

3. Die teleskopische Stützsäule (1) nach Anspruch 1 oder 2, **dadurch gekennzeichnet, dass** der Schließabschnitt (26) umfasst:
- eine Dichtung (41), die auf einer Innenwand der proximalen rohrförmigen Säule (7) gleitet; und
- eine oder mehr Schmierölzufuhreinrichtungen (17), die der Dichtung (41) Schmieröl zuführen.

4. Die teleskopische Stützsäule (1) nach einem der Ansprüche 1 bis 3,
**dadurch gekennzeichnet, dass** eine oder mehrere rohrförmige Zwischensäulen (8) zwischen der distalen rohrförmigen Säule (9) und der proximalen rohrförmigen Säule (7) vorgesehen sind, wobei die eine oder mehrere rohrförmige Zwischensäulen (8) einen Verbindungsabschnitt (28) aufweisen, der die distale rohrförmige Säule (9) mit der proximalen rohrförmigen Säule (7) in Verbindung bringt, und dass der Verbindungsabschnitt (28) umfasst:
- eine Dichtung (41), die auf einer Innenwand der proximalen rohrförmigen Säule (7) gleitet; und
- eine oder mehr Schmierölzufuhreinrichtungen (17), die der Dichtung (41) Schmieröl zuführen.

5. Die teleskopische Stützsäule (1) nach Anspruch 4, **dadurch gekennzeichnet, dass** die Schmierölzufuhreinrichtung (17) mit einem Zufuhrloch (51) ausgebildet ist, das in Fluidverbindung mit der Luftkammer (27) steht.

6. Ein Scheinwerfer (5), der die teleskopische Stützsäule (1) nach einem der Ansprüche 1 bis 5 umfasst.

## Revendications

1. Colonne télescopique de support (1) comprenant un mât (6) qui est réalisé de façon télescopique en insérant deux colonnes tubulaires (7, 8, 9) ou plus successivement les unes dans les autres par emboîtement, ladite colonne télescopique de support (1) comprenant en outre un mécanisme de freinage (16) pour rétracter modérément ledit mât (6), ledit mécanisme de freinage (16) comprenant:
- une portion de régulation de pression (25) prévue dans la colonne tubulaire proximale (7) qui forme une extrémité proximale du mât (6),
- une portion de fermeture (26) prévue dans la colonne tubulaire distale (9) qui forme une extrémité distale dudit mât (6); et
- une chambre à air (27) formée à l'intérieur du mât (6) en séparant ladite portion de régulation de pression (25) et ladite portion de fermeture (26), et ladite portion de régulation de pression (25) comprenant :
- un premier évent (31) faisant communiquer ladite chambre à air (27) avec un extérieur ;
**caractérisée par le fait que** ladite portion de régulation de pression comprenant en outre
- un deuxième évent (32) faisant communiquer ladite chambre à air (27) avec un extérieur ; et
- un élément formant vanne (33) qui ferme ledit deuxième évent (32) de manière à ce que seulement ledit deuxième évent (32) puisse être ouvert et fermé.

2. Colonne télescopique de support (1) selon la revendication 1, **caractérisée par le fait que** ledit élément formant vanne (33) autorise un flux d'air depuis un extérieur dans ladite chambre à air (27), tandis que ledit élément formant vanne (33) n'autorise pas un flux d'air depuis la chambre à air (27) vers un extérieur.

3. Colonne télescopique de support (1) selon la revendication 1 ou 2, **caractérisée par le fait que** ladite portion de fermeture (26) comprend:
- un joint d'étanchéité (41) qui glisse sur une paroi intérieure de ladite colonne tubulaire proximale (7), et
- un ou plusieurs mécanisme(s) d'alimentation en huile de graissage (17) qui amènent de l'huile de graissage audit joint d'étanchéité (41).

4. Colonne télescopique de support (1) selon l'une quelconque des revendications 1 à 3, **caractérisée par le fait qu'**une ou plusieurs colonnes tubulaires intermédiaires (8) sont prévues entre ladite colonne tubulaire distale (9) et ladite colonne tubulaire proximale (7), ladite une ou lesdites plusieurs colonne(s) tubulaire(s) intermédiaire(s) (8) comprenant une portion de communication (28) qui fait communiquer ladite colonne tubulaire distale (9) avec ladite colonne tubulaire proximale (7), et que ladite portion de communication (28) comprend:
- un joint d'étanchéité (41) qui glisse sur une paroi intérieure de ladite colonne tubulaire proximale (7), et
- un ou plusieurs mécanisme(s) d'alimentation en huile de graissage (17) qui amènent de l'huile de graissage audit joint d'étanchéité (41).

5. Colonne télescopique de support (1) selon la revendication 4, **caractérisée par le fait que** ledit mécanisme d'alimentation en huile de graissage (17) est formé avec un trou d'amenée (51) qui est en communication de fluide avec ladite chambre à air (27).

6. Projecteur (5) comprenant ladite colonne télescopique de support (1) selon l'une quelconque des revendications 1 à 5.
